# EUROPEAN PATENT APPLICATION

(11) **EP 1 950 027 A2**
(43) Date of publication of application: **30.07.2008**
(21) Application number: 08250310.3
(22) Date of filing: 25.01.2008
(51) Int. Cl.: B29C 47/24

(54) **Formed article and its production process and extruder**

(30) Priority: 25.01.2007 JP 2007015068
(71) Applicant: Sumitomo Chemical Company, Limited, Tokyo 104-8260 (JP)
(72) Inventor: Tsuchimoto, Kazuya, Ehime (JP); Yamanishi, Osamu, Ehime (JP)
(74) Representative: Nicholls, Michael John

(57) **Abstract**

There is provided a formed article (10) characterized in that it includes a cylindrical coil member (11) having spiral turns with a predetermined pitch thereof and a supporting member (12) which extends along a direction parallel to an axis of the cylindrical coil member (11) and which connects the spiral turns, and also provided a production process of the formed article (10) characterized in that an extruder is used which includes a first die having a groove on its outer peripheral surface and a second die in the form of a ring which has a groove on its inner peripheral surface and into which the first die is fitted, and a forming material is extruded by the extruder while only one of the dies is rotated with respect to the other die.

## Description

The present invention relates to a formed article as an extrudate which is useful for a catalyst, a catalyst support, an adsorbent, a drying material, a humidity controlling material or the like, and a production process of such formed article, and also an extruder which is used for such production process.

A formed article in the form of a cylindrical column or a cylinder has hitherto been used as for example a catalyst or a catalyst support. Such formed articles have been conventionally used for a catalytic reaction in a fixed bed reaction apparatus. The formed articles as catalysts or catalyst supports are generally used while charged in a reaction tube, through which a gas or the like is passed.

When the formed articles are charged in the reaction tube and the gas is passed through the charged articles, there is a pressure difference between a reactor inlet and a reactor outlet, namely a so-called pressure drop is caused. If such pressure drop is large, there may occur a problem such as reduction in selectivity of an aimed product.

As to the problem of the pressure drop, it is contemplated that a formed article in the form of a cylinder is more effective among the formed articles each having a known form since said former article is able to make a gas flow inside the cylinder form. However, even the cylindrical formed article may in fact not be able to effectively provide its high catalyst performance. That is, even the cylindrical article cannot reduce the pressure difference unless axes directions of the cylindrical articles correspond to a flow direction of the gas. This is because the gas does not flow inside the cylindrical forms when no such correspondence is achieved.

Thus, various formed articles have been proposed so as to solve problems such as the pressure drop while considering the forms of the articles. For example, a cylindrical catalyst granule of which cross section contacts with its circumcircle at at least three points has been proposed which granule has at least three through bores which are substantially parallel to each other and also to an axis of the granule and which are separated by substantially the same distance from each other (see Japanese non-examined patent publication No. 06-134318).

Also, a formed catalyst has been proposed for the useful production of acrolein by catalytic gas phase oxidation of propene which catalyst has parameters such as a three dimensional expansion extent, a porosity, a meso-pore volume, a macro-pore volume, a mercury density, a specific surface area, a break strength, an abrasion ratio, a pressure drop and the like each in a specific range (see Japanese Patent No. 2826181).

The forms of the formed articles as described in the above patent references are based on the improvement of the conventionally known forms. Specifically, the number of through bores has been increased from the conventional one to a plural number (for example three or four), or the shape of the cross section of the through bore and/or a peripheral shape of the cross section of the cylindrical formed article has been changed from the conventional circle to other various shapes (such as a triangle, a rectangular or the like). For example, the catalyst granule of Japanese non-examined patent publication No. 06-134318 is in the form wherein three cylindrical members are bound.

The above mentioned formed articles as described in the parent references are advantageous as to the pressure drop when compared with a simple cylindrical formed articles having a single through bore.

However, each of the bores of the above mentioned formed articles as described in the parent references is a through bore which extends along a direction of the axis of the cylindrical article. Therefore, when such formed articles are charged in a reaction tube of a fixed bed reaction apparatus without any intention, directions of the formed articles do not always correspond to a direction of a reaction gas stream, so that it often occurs that almost no effect of the reduction of the pressure difference can be expected. Thus, further improvement in the form of the formed article is desirable in order that the catalyst performance of the catalyst formed article is developed more effectively.

It is, therefore, an object of the present invention to provide a formed article which achieves a smaller pressure drop when charged in an apparatus such as a fixed bed reaction apparatus or various vessels, and also to provide a production process of such formed article as well as an extruder which is used for such production process.

The present inventors have made extensive studies so as to solve the above mentioned problem, and have found that a smaller pressure drop is achieved, compared with a cylindrical formed article, by a formed article which comprises a cylindrical coil member having spiral turns with a predetermined pitch thereof and a supporting member which extends along a direction which is parallel to an axis of the cylindrical coil member and which connects the spiral turns when such formed articles are charged in an apparatus such as a fixed bed reaction apparatus or various vessels without any intention as to orientation alignment of the formed articles.

Further, the present inventors have found an extrusion process as a process for the production of such formed articles wherein a specific extruder is used which comprises a first die having a groove on its outer peripheral surface and a second die in the form of a ring which has a groove on its inner peripheral surface and into which the first die is fitted, and a forming material is extruded by the extruder while only one of those dies is rotated with respect to the other die.

That is, the present invention provides the following:
(1) a formed article which is characterized in that it comprises a cylindrical coil member having spiral turns with a predetermined pitch thereof and a supporting member which extends along a direction parallel to an axis of the cylindrical coil member and which connects the spiral turns;
(2) the formed article as in above (1) which is characterized in that it comprises a plurality of the supporting members;
(3) a production process of a formed article which comprises using an extruder comprising a first die having a groove on its outer peripheral surface and a second die in the form of a ring which has a groove on its inner peripheral surface and into which the first die is fitted, and extruding a forming material by the extruder while only one of those dies is rotated with respect to the other die; and
(4) an extruder which is characterized in that it comprises a first die having a groove on its outer peripheral surface, a second die in the form of a ring which has a groove on its inner peripheral surface and into which the first die is fitted, and a rotating means which rotates only one of those dies with respect to the other die.

According to the present invention, a formed article is provided by the extrusion process which article suppresses a pressure drop to a smaller extent even when such articles are charged in an apparatus such as a fixed bed reaction apparatus or various vessels in any orientation without any intention. Further, such formed article is advantage in that it has an appropriate strength even with having a larger surface area. Therefore, the formed article according to the present invention is useful as a catalyst, a catalyst support, an adsorbent, a drying material, a humidity controlling material or the like. Particularly, there occurs an effect in that when it is used as the catalyst or the catalyst support, its catalytic performance is effectively developed.
The invention will be further described by way of example with reference to the accompanying drawings, in which:-

Fig. 1 (a) shows a schematic side view of one embodiment of a formed article according to the present invention, Fig. 1 (b) is a schematic plane view of the formed article shown in Fig. 1 (a) when seeing the article from its above, and Fig. 1 (c) is a schematic cross sectional view of the formed article along a line X-X shown in Fig. 1 (b).

Fig. 2 (a) schematically shows an enlarged cross sectional view of an extrusion bore of an extruder in one embodiment according to the present invention, and Fig. 2 (b) is a schematic cross sectional view of the extruder of Fig. 2 (a).

- 10: formed article
- 11: cylindrical coil member
- 12: supporting member
- 13: through bore
- 20: extruder
- 21: first die
- 21a: first die groove
- 22: second die
- 22a: second die groove
- 23: rotating means
- 23a: rotating shaft
- 23b: motor
- 24: cutting means
- 25: flow pass

### (Formed Article)

The formed article according to the present invention comprises the cylindrical coil member having the spiral turns which are spaced by a predetermined pitch (or a spacing) and at least one supporting member which connects the spiral turns and which extends parallel to an axis of the cylindrical coil member.

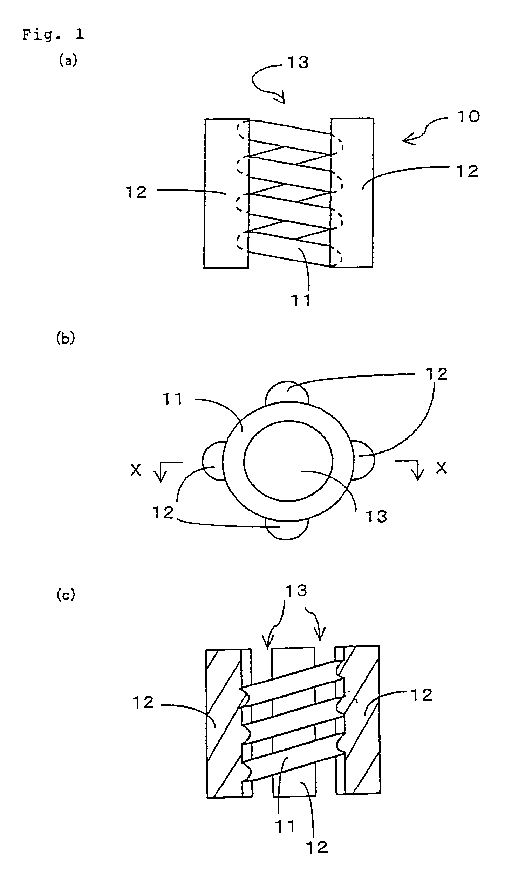

The formed article according to the present invention will be explained in detail with reference to the drawings. Fig. 1 (a) shows a schematic side view of one embodiment of the formed article according to the present invention, Fig. 1 (b) is a schematic plane view of the formed article shown in Fig. 1 (a) when seeing the article from above its top, and Fig. 1 (c) is a schematic cross sectional view of the formed article along a line X-X shown in Fig. 1 (b).

The formed article 10 shown in Fig. 1 (a) comprises the cylindrical coli member 11 and the supporting members 12. The coil member 11 is a member which is formed by extruding a forming material into a single elongated strand to form the spiral turns with a predetermined pitch so that it defines a through bore (or a through hole) 13 which extends along an axis of the cylindrical member. A cross sectional shape of the strand which forms the cylindrical coil member 11 is not particularly limited, and it may be any shape such as a semicircle, a circle, a triangle or the like. Also, the thickness of the strand is not particularly limited as far as the strand can keep its spiral turns with a predetermined spacing between adjacent turns. The predetermined spacing herein is not particularly limited, and it is in the range usually between 0.1 mm and 10 mm, and preferably between 0.5 mm and 5 mm. It is noted such spacing is not necessarily but preferably the same throughout all of the spiral turns.

The size of the cylindrical coil member 11 is not particularly limited, and for example its length (a height of the cylinder) is in the range between 1 mm and 50 mm, and preferably between 3 mm and 30 mm, its diameter (an outer diameter of the cylinder as a whole) is in the range between 1 mm and 50 mm, and preferably between 3 mm and 30 mm, and the diameter of the through bore 13 is in the range between 0.1 mm and 49 mm, and preferably between 0.2 mm and 48 mm.

It is noted that the cylindrical coil member 11 of the formed article 10 shown in Fig. 1 comprises the spiral turns made of a sing strand, but it may comprise double spiral turns made of two strands or multi-fold spiral turns made of three or more strands. It is desirable in the case of using the plural strands that the adjacent turns extend parallel and are separated from each other with the predetermined spacing so that the adjacent turns are not in contact with each other.

In the shown embodiment, the cylindrical coil member 11 comprises four supporting members attached thereto which extend parallel to the axis of the cylindrical member 11 wherein the supporting members 12 are positioned around the periphery of the coil member 11 with a generally equal spacing. It is noted that the shown embodiment comprises the four supporting members, but the number of the supporting members is not particularly limited. In order to ensure an appropriate strength of the formed article, the number of the supporting members is preferably plural.

The shape of the cross section of the supporting member 12 is not particularly limited, and it may be for example any of a (general) semicircle, a circle, a triangle and the like. In order to make sure the connection of the supporting member 12 with the cylindrical coil member 11, the cross sectional shape of the supporting member 12 preferably ensures a sufficient contact area with the cylindrical coil member 11 such as in the shape of a generally semicircle as shown in Fig. 1 (b).

The size of the supporting member 12 is not particularly limited, and for example its length is in the range between 1 mm and 50 mm, and preferably between 3 mm and 30 mm. As to its thickness, a radius of the cross section of the supporting member (when having a generally semicircular cross section) may be in the range between 0.1 mm and 12 mm, and preferably between 0.2 mm and 11 mm.

It is noted that the supporting member(s) 12 is connected right parallel to the direction of the axis of the cylindrical coil member 11 in the embodiment shown in Fig. 1. However, such connection is not necessarily required and the supporting member(s) may be connected to the cylindrical coil member 11 while being slanted more or less relative to the axis of the cylindrical coil member 11 in other embodiment as far as a plurality of the spacings each defined by the adjacent spiral turns of the cylindrical coil member 11 are connected with the supporting member(s).

In the shown embodiment of the formed article 10, the supporting members 12 are located on and around the outer peripheral surface of the cylindrical coil member 11. In other embodiment, the supporting members 12 may be located on and around the inner peripheral surface of the cylindrical coil member 11, namely just around the through bore 13.

The formed article according to the present invention is characterized by its form, and there is no particular limitation as to the material which forms the formed article (namely, a forming material). Thus, there is no specific limitation as to a kind, a composition and the like of the forming material. The forming material is selected depending on the application of the formed article. When the formed article according to the present invention is used as a catalyst, for example a metal oxide (such as alumina, silica, titania or the like), a compound metal oxide of which main component is molybdenum, cobalt, bismuth or the like, or a heteropoly acid which contains molybdenum, vanadium, phosphorus or the like may be used. When the formed article according to the present invention is used as a catalyst support, for example cordierite, murite, pseudo-boehmite, silica/alumina, zirconia, magnesia spinel, α-alumina, silica or the like may be used. When the formed article according to the present invention is used as an adsorbent, a drying material or a humidity conditioning agent, for example activated carbon, silica gel, activated alumina, silica/alumina, zeolite, smectite, apatite, diatom earth or the like may be used. Further, the formed article according to the present invention may be formed by using any of various plastic materials in addition to the above mentioned materials.

The formed article according to the present invention is used as the catalyst, the catalyst support, the adsorbent, the drying material, the humidity conditioning agent or the like. Particularly when the formed article is used as the catalyst or the catalyst support, it is preferable that the formed articles according to the present invention are used while being charged in a reaction apparatus such as a fixed bed reaction apparatus or various vessels in order that the effects of the present invention are better developed. That is, even when the formed articles according to the present invention are charged without any intention as to their orientation in the vessel, there is provided an effect in that the pressure drop is suppressed to a lower extent. Therefore, when the formed articles are charged in the tube reactor of the fixed bed reaction apparatus, the catalytic function of the formed articles are able to be effectively developed.

The formed article according to the present invention is produced by the process which will be described in detail below, but the production process of the formed article according to the present invention is not limited to such process.

### (Production Process of Formed Article and Extruder)

The production process of the formed article according to the present invention comprises using an extruder comprising a first die having a groove on its outer peripheral surface and a second die in the form of a ring into which the first die is inserted and which has a groove on its inner peripheral surface, and extruding a forming material by such extruder while rotating only one of the dies relative to the other die.

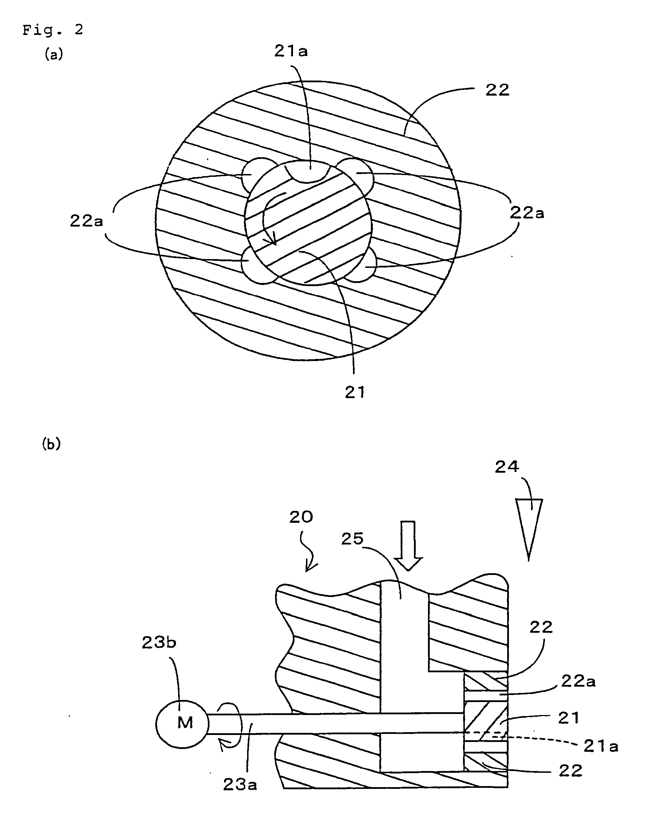

The extruder according to the present invention which is used for the production of the formed article according to the present invention will be explained in detail with reference to the drawings below. Fig. 2 (a) schematically shows an enlarged cross sectional view of a part of an extrusion bore of the extruder in one embodiment according to the present invention, and Fig. 2 (b) is a schematic cross sectional view of the extruder of Fig. 2 (a).

The extruder 20 shown in Fig. 2 comprises the first die 21 having a groove 21a on its outer peripheral surface, and the second die 22 in the form of the ring into which the first die is fitted (or inserted) and which has four grooves 22a on its inner peripheral surface. Particularly, the first die 21 and the second die 22 are attached to a front end of the extruder 20 in the state wherein the first die 21 was inserted into the second die 22. The forming material is continuously extruded through the groove 21a of the first die 21 and the grooves 22a of the second die 22.

The sizes of the first die 21 and its groove 21a as well as the second die 22 and its grooves 22a are not particularly limited. For example, the outer diameter of the first die 21 is in the range between 0.6 mm and 49 mm and preferably between 1.6 mm and 29 mm, and the depth of the groove 21a is such that the groove is defined by an arc of which radius (R) is in the range between 0.2 mm and 12 mm and preferably between 0.7 mm and 7 mm. Also, for example the outer diameter of the second die 22 is in the range between 1 mm and 150 mm and preferably between 2 mm and 100 mm, the inner diameter of the second die 22 is in the range between 0.6 mm and 49 mm and preferably between 1.6 mm and 29 mm, and the depth of the groove 22a is such that the groove is defined by an arc of which radius (R) is in the range between 0.2 mm and 12 mm and preferably between 0.7 mm and 7 mm. It is noted in the embodiment shown in Fig. 2 that the number of the grooves 22a is four, to which the number of the grooves 22a is not limited. The numbers of the groove(s) 21a and the groove(s) 22a are optionally selected depending on the number of the supporting member(s) 12 of the formed article to be produced, the number of the strand(s) which forms the cylindrical coil member 11 of the formed article to be produced, and whether the supporting member(s) is formed outside the cylindrical coil member 11 or inside the cylindrical coil member 11 in the formed article to be produced.

The extruder 20 further comprises a rotating means 23 which rotates either one only of the first die 21 and the second die 22. The rotating means 23 is not particularly limited, and the conventional rotating means such as a motor may be used as such means. Specifically, in the shown embodiment in Fig. 2, a rotating shaft 23a which is fixed to the first die 21 is driven by the motor 23b so as to rotate the first die 21. In this embodiment, the forming material which has extruded out through the grooves 21a of the first die 21 forms the cylindrical coil member 11 while the forming material which has extruded out through the four grooves 22a of the second die 22 forms the supporting members 12, so that the obtained formed article is such that the supporting members 12 are located on the outer peripheral surface of the cylindrical coil member 11 as shown in Fig. 1.

When the rotating means 23 rotates the second die 22 contrary to the embodiment as shown in Fig. 2, the forming material which has extruded out through the groove 21a of the first die 21 forms the supporting member 12 while the forming material which has extruded out through the grooves 22a of the second die 22 forms the cylindrical coil member 11, so that the obtained formed article is such that the supporting member 12 is located on the inner peripheral surface of the cylindrical coil member 11 (that is, the supporting member is located around the through bore 13).

The extruder further comprises a cutting means 24 which cuts the forming material that has just been extruded out from the first and second dies 21 and 22. By cutting the extruded forming material into pieces each having a predetermined length of the formed article to be produced, so that a number of the formed articles according to the present invention are produced continuously. There is no particular limitation as to the cutting means 24, and any known cutting means may be used. For example, a cutter blade, a wire such as a piano wire tacked between two guide rollers or the like may be used while it is moved by a motor.

The extruder according to the present invention may further comprise a flow rate control valve (not shown) so as to control an extrusion rate of the forming material which is extruded out through the grooves 21a and 22a.

The present invention will be described below in detail with reference to examples and comparative examples, but the present invention is not limited to those

### examples.

### (Example 1)

Powder of p-alumina (100 parts by weight) and stearic acid (2 parts by weight) were mixed to obtain a powder mixture, to which hydroxypropyl-methylcellulose (4 parts by weight) was added to obtain a mixture. Then, water (19 parts by weight) and ice (21 parts by weight) were added to such mixture and mixed by a kneader while melting the ice so that a forming material was obtained.

Thus obtained forming material was charged in a flow pass 25 of the extruder as shown in Fig. 2 (diameter of first die 21: 12 mm, and depth of groove 21a (R): 3 mm, number of grooves 21 a: two; outer diameter of second die 22: 30 mm, inner diameter of second die 22: 12 mm, depth of groove 22a (R): 3.5 mm, and number of grooves 21 a: four), and extruded at a extrusion rate of 119 mm/min. while rotating the first die 21 by the motor 23b at a rotation speed of 12 rpm. Strands each of which was in the form of spiral were extruded out through the grooves 21a while rods which were to be the supporting members were extruded out through the grooves 22a in the state wherein the strands and the rods were connected to each other. Thus extruded strands and the rods were cut by the cutting means 24 such that formed articles in the form as shown in Fig. 1 each having a predetermined length were obtained. Then, the formed articles were dried, followed by calcined in air for 2 hours at a temperature of 1300 °C so that the formed articles according to the present invention were obtained. The calcined formed articles had the following dimensions:

| | |
|---|---|
| Height of cylinder: | 12 mm to 18 mm |
| Outer diameter of cylinder as a whole: | 15 mm to 17 mm |
| Diameter of through bore 13: | 2 mm to 5 mm |
| Spacing between spiral turns of cylindrical coil member 11: | 0.5 mm to 2 mm |

A piece of mesh was placed in an acrylic resin pipe (having an inner diameter of 77.5 mm and a length of 470 mm) at a position of 30 mm from one open end of the pipe. A lid to which a tube for supplying a gas was attached and to which an inside screw was threaded was fitted to the other open end of the pipe. Then, positioning the pipe in the state wherein the end near the mesh was located downward, a gas was supplied to the acrylic resin pipe from its top to the bottom through the tube attached to the lid, and a pressure difference from the atmospheric pressure was measured as a blank pressure drop (P0). Air having a pressure of 0.4 MPa was used as such gas, and it was supplied to the acrylic resin pipe at a flow rate of 80 liters per minute. For the pressure drop measurement, a digital manometer was used.

Then, the lid was once removed from the acrylic pipe, into which the above obtained calcined formed articles were charged up to a height of 235 mm and the lid was again attached to the pipe, followed by measuring a pressure drop as a charged pressure drop (P1) as described above. It is noted that the charged amount of the formed articles was 538.2 g and an apparent density of the charged formed articles was 0.49 g/cm³.

A pressure drop due to the formed articles was obtained as 11 Pa by subtracting the blank pressure drop (P0) from the charged pressure drop (p1), namely calculating a difference between them (P1-P0),

### (Comparative Example 1)

The forming material which was the same as in Example 1 was charged into a conventional extruder including a pin (outer diameter: 8.25 mm) located in the center of a die (outer diameter: 16.6 mm). A piston was placed on the top of thus charged forming material. The forming material was extruded out into a cylinder by applying a predetermined load to the piston at a constant speed using a tensile testing machine, and the extruded cylinder was cut into pieces each having a predetermined length, followed by drying them and calcining them in air for 2 hours at a temperature of 1300 °C so that the formed articles in the form of cylinder were obtained. The calcined formed articles in the form of cylinder had the following dimensions:

| | |
|---|---|
| Height of cylinder: | 16 mm to 18 mm |
| Outer diameter of cylinder: | 15 mm to 16 mm |
| Inner diameter of cylinder: | 7 mm to 8 mm |

Then, the pressure drop due to the above obtained formed articles was measured as in Example 1, and it was 13 Pa. It is noted that an amount of the formed articles charged in the acrylic resin pipe was 568.3 g and an apparent density of the charged formed articles was 0.51 g/cm³.

### (Example 2)

Powder of p-alumina (100 parts by weight) and stearic acid (2 parts by weight) were mixed to obtain a powder mixture, to which α-alumina powder (10 parts by weight), silica/alumina fiber (4 parts by weight), hydroxypropyl-methylcellulose (4 parts by weight), and polyethylene glycol (8 parts by weight) were added to obtain a mixture. Then, water (57 parts by weight) was added to such mixture and mixed by a kneader so that a forming material was obtained.

Calcined formed articles were obtained as in Example 1 except that the above obtained forming material was used, an extruder shown in Fig. 2 (diameter of first die 21: 5.7 mm, and depth of groove 21a (R): 1.4 mm, number of grooves 21a; two; outer diameter of second die 22: 30 mm, inner diameter of second die 22: 5.7 mm, depth of groove 22a (R): 1.65 mm, and number of grooves 22a: four) was used, and the forming material was extruded at a extrusion rate of 180 mm/min. while rotating the first die 21 by the motor 23b at a rotation speed of 30 rpm. The calcined formed articles according to the present invention thus obtained had the following dimensions:

| | |
|---|---|
| Height of cylinder: | 7 mm to 10 mm |
| Outer diameter of cylinder as a whole: | 7 mm to 8 mm |
| Diameter of through bore 13: | 1.0 mm to 3 mm |
| Spacing between spiral turns of cylindrical coil member 11: | 0.5 mm to 2 mm |

Then, the pressure drop due to the above obtained calcined formed articles was measured as in Example 1, and it was 45 Pa. It is noted that an amount of the calcined formed articles charged in the acrylic resin pipe was 483.2 g and an apparent density of the charged calcined formed articles was 0.44 g/cm³.

### (Comparative Example 2)

Calcined formed articles in the form of a cylinder were obtained as in Comparative Example 1 except that the forming material which was obtained in Example 2 was used, and a conventional extruder including a pin (outer diameter: 2.97 mm) located in the center of a die (outer diameter: 8.05 mm) was used. The calcined formed articles in the form of a cylinder had the following dimensions:

| | |
|---|---|
| Height of cylinder: | 7 mm to 10 mm |
| Outer diameter of cylinder: | 8 mm to 9 mm |
| Inner diameter of cylinder: | 3.0 mm to 3.2 mm |

Then, the pressure drop due to the above obtained formed articles was measured as in Example 1, and it was 65 Pa. It is noted that an amount of the formed articles charged in the acrylic resin pipe was 479.8 g and an apparent density of the charged formed articles was 0.43 g/cm³.

The reaction pipes into which the formed articles of the Examples were charged showed a smaller pressure drop between the inlet of the pipe and the outlet of the pipe upon the gas was supplied when compared with the reaction pipes into which the formed articles of the Comparative Examples were charged.

## Claims

1. A formed article **characterized in that** it comprises a cylindrical coil member having spiral turns with a predetermined pitch thereof and a supporting member which extends along a direction parallel to an axis of the cylindrical coil member and which connects the spiral turns.

2. The formed article according to claim 1 **characterized in that** it comprises a plurality of the supporting members.

3. A production process of a formed article **characterized in that** it comprises using an extruder comprising a first die having a groove on its outer peripheral surface and a second die in the form of a ring which has a groove on its inner peripheral surface and into which the first die is fitted, and extruding a forming material by the extruder while only one of the dies is rotated with respect to the other die.

4. An extruder **characterized in that** it comprises a first die having a groove on its outer peripheral surface, a second die in the form of a ring which has a groove on its inner peripheral surface and into which the first die is fitted, and a rotating means which rotates only one of those dies with respect to the other die.
